# EUROPEAN PATENT SPECIFICATION

(11) **EP 2 515 611 B1**
(45) Date of publication and mention of the grant of the patent: **18.03.2015**
(21) Application number: 12002222.3
(22) Date of filing: 28.03.2012
(51) Int. Cl.: H05B 33/08

(54) **Lighting device and illumination apparatus**
Lichtvorrichtung und Beleuchtungsvorrichtung
Dispositif d'éclairage et appareil d'éclairage

(30) Priority: 21.04.2011 JP 2011095034
(43) Date of publication of application: 24.10.2012
(73) Proprietor: Panasonic Corporation, Osaka 571-8501 (JP)
(72) Inventor: Matsuda, Kenji, Osaka 540-6207 (JP); Nakamura, Ryosuke, Osaka 540-6207 (JP)
(74) Representative: Samson & Partner

(56) References cited:
- US-A1- 2008 304 294
- US-A1- 2009 273 738
- US-A1- 2010 219 766

## Description

### Field of the Invention

The present invention relates to a lighting device for lighting solid-state light emitting elements, and an illumination apparatus having the lighting device.

### Background of the Invention

Conventionally, as a lighting device for lighting solid-state light emitting elements, a lighting device is proposed that includes a control switch for supplying a constant current to a solid-state light emitting element to control the ON/OFF periods of the control switch and to light the solid-state light emitting element at a preset dimming level.

For example, in a lighting circuit disclosed in Japanese Patent Application Publication No. 2011-70966 (JP2011-70966A), a switching operation is performed to control the ON/OFF operation of a switching element by a PWM (Pulse Width Modulation) signal having an on-duty ratio determined based on a dimming control value indicative of the dimming level of a light source. Further, in the lighting circuit, the above-described switching operation is initiated or stopped during a first period corresponding to a half cycle of AC (Alternating Current) power or during an ON-duty cycle of PWM signal according to the dimming control value. That is, in this lighting circuit, a light emitting diode as the light source is turned on at the preset dimming level by a burst control of the ON/OFF operation of the switching element.

However, since the output of the lighting circuit disclosed in JP2011-70966A increases during an ON period in which a switching operation is performed, and decreases during an OFF period in which a switching operation is stopped, a ripple waveform is generated on an output voltage or on a light output. In particular, since the response speed of a solid-state light emitting element is faster than that of other light sources (fluorescent lights or the like), there is a probability that a variation in light output may be visually detected if a dimming level is low or if the period of burst control (first period) is lengthened.

A burst control system in an EEFL backlighting panel is known from US 2009 273 738 A1.

### Summary of the Invention

Therefore, the present invention provides a lighting device and an illumination apparatus capable of suppressing a blinking or flicker phenomenon even when a solid-state light emitting element is lighting with a low output.

In accordance with an aspect of the present invention, there is provided a lighting device including: a lighting circuit for switching an input from a DC power source by using a switching element and outputting a smoothed output to a solid-state light emitting element; and a dimming control unit for controlling a switching operation of the switching element based on a control signal having an on-duty ratio determined according to a dimming level to thereby adjust an output to the solid-state light emitting element.

The dimming control unit has: a driving control unit for performing a pulse width modulation (PWM) control on the switching element; and a burst control unit for receiving a feedback signal varying depending on the output to the solid-state light emitting element and providing a stop period in the PWM control performed by the driving control unit, based on a threshold value and magnitudes of the feedback signal and a reference signal.

The burst control unit preferably provides the stop period in the PWM control by the driving control unit, based on the threshold value and a difference signal which is determined by the difference between the feedback signal and the reference signal.

The burst control unit may include a reference signal generation unit generating the reference signal, a frequency of the reference signal being equal to a frequency of the control signal.

Herein, a lower and an upper limit of the frequency of the control signal are preferably 300 Hz and 1000 Hz, respectively.

In accordance with another aspect of the present invention, there is provided an illumination apparatus including the solid-state light emitting element and the lighting device described above.

In the lighting device and the illumination apparatus according to the aspects of the present invention, even when a solid-state light emitting element is turned on with a low output, a blinking or flicker phenomenon may be suppressed.

### Brief Description of the Drawings

The objects and features of the present invention will be apparent from the following description of preferred embodiments which is given in conjunction with the accompanying drawings, as follows:
Fig. 1 is a schematic circuit diagram showing an illumination apparatus in accordance with an embodiment of the present invention;
Fig. 2 is a schematic circuit diagram showing the primary portion of the illumination apparatus;
Fig. 3 shows the operation of the illumination apparatus;
Fig. 4 is a graph showing the operation of the illumination apparatus; and
Fig. 5 is a graph showing the operation of the illumination apparatus.

### Detailed Description of the Preferred Embodiments

Hereinafter, embodiments of the present invention will be described with reference to the accompanying drawings which form a part hereof.

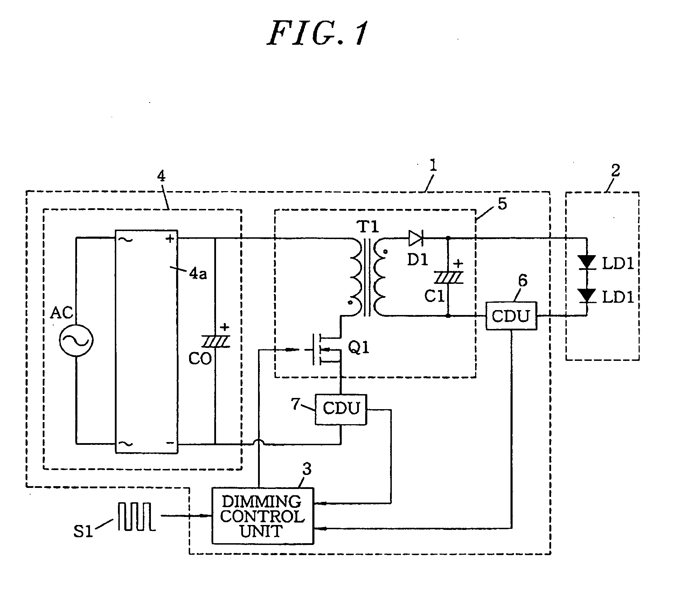

As shown in Fig. 1, an illumination apparatus in accordance with the present embodiment includes a light source 2, and a lighting device 1 for controlling the lighting state of the light source 2. In the light source 2, one or more solid-state light emitting elements LD1 implemented as LEDs (Light Emitting Diodes) are connected to one another. In the present embodiment, two solid-state light emitting elements LD1 and LD1 are connected in series. Further, the number and connection method of the solid-state light emitting elements LD1 are not limited thereto, and can be adjusted as circumstances demand. Further, the solid-state light emitting elements LD1 are not limited to LEDs, and any other light emitting elements, such as an OLED (Organic Light Emitting Diode), may be used.

The lighting device 1 includes a Direct Current (DC) power supply 4, an insulation flyback circuit 5 for turning on the light source 2 by switching the output of the DC power supply 4, and a dimming control unit 3 for controlling the switching operation of a switching element Q1 constituting the insulation flyback circuit 5. Further, the lighting device 1 includes current detection units (CDU) 6 and 7, which detect a current I1 flowing through the light source 2 and a drain current I2 of the switching element Q1, respectively.

The DC power supply 4 is a DC constant current power supply, and includes, e.g., a rectifier circuit 4a for full-wave rectifying an AC power from a commercial AC power supply to convert the AC power into a DC power, and a capacitor C0 connected between the output terminals of the rectifier circuit 4a. Further, the DC power supply 4 may be either a scheme in which a DC/DC converter is provided in a DC constant power supply for outputting a DC power, or a scheme having only a DC constant power supply.

The insulation flyback circuit 5 includes an insulation transformer (hereinafter referred to as a 'transformer') T1, a switching element Q1 connected to the primary coil of the transformer T1, and a capacitor C1 and a diode D1 that are connected to the secondary coil of the transformer T1. The capacitor C1 is connected in parallel with the light source 2 between the terminals of the secondary coil of the transformer T1 and.

The dimming control unit 3 is configured such that a control signal S1 implemented as a PWM signal, the having an on-duty ratio of which changes based on the dimming level set by a user by using the manipulation unit (not shown) of the illumination apparatus, is inputted to the dimming control unit 3, thus controlling the ON/OFF operations of the switching element Q1 in response to the control signal S1.

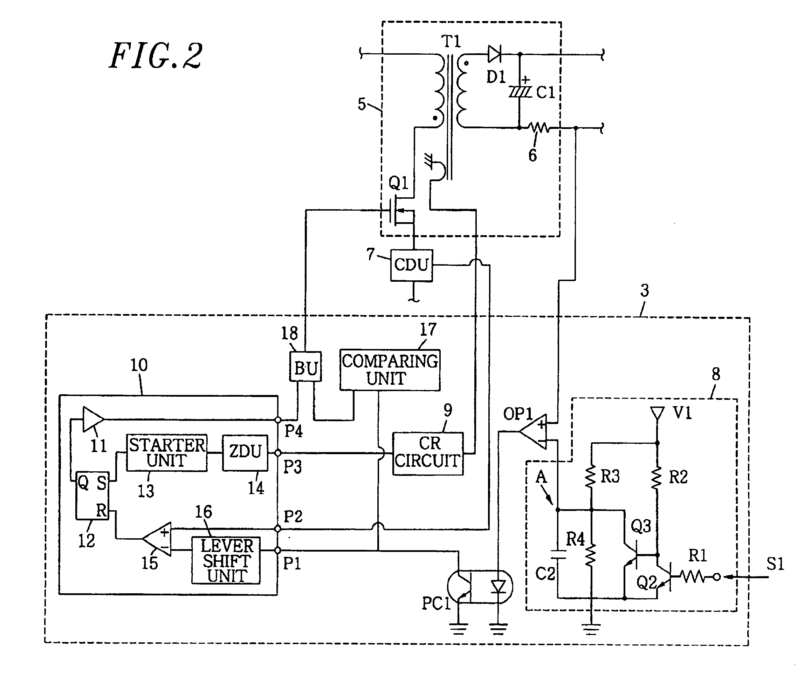

The circuit shown in Fig. 2 is a detailed example of the dimming control unit 3, and includes a reference signal generation unit 8 for outputting a reference signal based on the control signal S1 that has been inputted from the outside, and an OP Amp (Operational Amplifier) OP1 for receiving the reference signal outputted from the reference signal generation unit 8 as an inverting input and receiving a feedback signal according to the output of the current detection unit 6 as a non-inverting input. The output of the OP Amp OP1 is inputted to the light emitting element of a photo coupler PC1 provided in the dimming control unit 3.

The reference signal generation unit 8 includes a transistor Q2 having a base to which the control signal S1 is inputted via a resistor R1, and a transistor Q3, a base of which is connected to a collector of the transistor Q2. A DC voltage V1 is applied between the collector and an emitter of the transistor Q2 via a resistor R2. A voltage obtained by dividing the DC voltage V1 by resistors R3 and R4 is applied between a collector and an emitter of the transistor Q3, and a capacitor C2 is connected in parallel with the resistor R4. A voltage between two ends of the capacitor C2 is connected to the inverting input terminal of the OP Amp OP1.

Herein, a potential at the inverting input terminal of the OP Amp OP1 (that is, a potential at point A shown in Fig. 2) is assumed to be a reference potential Va. When the control signal S1 is at a high (H) level, the transistor Q2 is turned on and the transistor Q3 is turned off. Accordingly, the reference potential Va gradually rises. Further, when the control signal S1 is at a low (L) level, the transistor Q2 is turned off, and the transistor Q3 is turned on, so that the reference potential Va gradually falls. This operation is repeated according to a variation in the signal level of the control signal S1, and the reference potential Va repeats rising and falling in the cycle identical to that of the control signal S1.

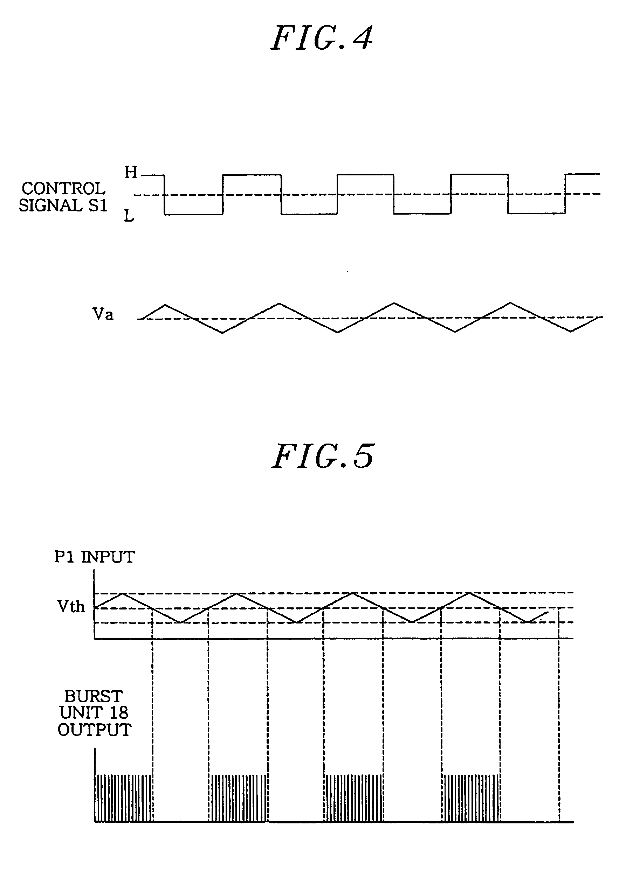

That is, the reference signal generation unit 8 outputs a signal, having the same frequency component as the control signal S1, to the OP Amp OP1 as the reference signal (refer to Fig. 4), so that the frequency component of the reference signal is also contained in the output of the OP Amp OP1.

Further, the dimming control unit 3 includes a control IC (driving control unit) 10 implemented as a universal IC (Integrated Circuit) for controlling the ON/OFF operations of the switching element Q1. As shown in Fig. 2, the control IC 10 includes a driving unit 11, a starter unit 13, a zero-potential detection unit (ZDU) 14, a comparator 15, a level shift unit 16, and a driving controller 12 as an RS flip-flop. Further, in the control IC 10, at least four terminals, such as an FB terminal P1, an IS terminal P2, a ZCD terminal P3, and an OUT terminal P4, are provided.

The FB terminal P1 is connected to the output of the photo coupler PC1, so that the potential of the FB terminal P1 falls proportionally as the input of the photo coupler PC1 increases. Further, since the FB terminal P1 is connected to a reference potential side of the comparator 15 via the level shift unit 16, the reference potential of the comparator 15 falls as the potential of the FB terminal P1 falls. Therefore, the comparator 15 is set such that as the input of the photo coupler PC1 increases, the reference potential of the comparator 15 falls.

The IS terminal P2 is connected to the current detection unit 7, such that a potential output based on the drain current 12 of the switching element Q1 is inputted to the comparator 15. In this case, since the output of the comparator 15 is inputted to a RESET terminal of the driving controller 12, when the potential based on the drain current 12 of the switching element Q1 becomes greater than the reference potential of the comparator 15, a RESET signal is inputted to the driving controller 12.

To the ZCD terminal P3, e.g., a signal, which is obtained by delaying a voltage Vsub of a detection coil 20 provided in the transformer T1 using a CR circuit 9, is inputted. When a potential inputted to the ZCD terminal P3 becomes not greater than a threshold value (e.g., 0 V) of the zero-potential detection unit 14, a short pulse wave from the starter unit 13 is inputted as a SET signal to the SET terminal of the driving controller 12.

The OUT terminal P4 is connected to a burst unit 18, to which an output of a comparing unit 17 comparing the potential of the FB terminal P1 and a predetermined stop threshold voltage Vth is provided, and the output of the burst unit 18 is provided to the gate of the switching element Q1. Therefore, when the comparing unit 17 provides an H level signal to the burst unit 18, the switching element Q1 performs ON/OFF switching according to a drive signal of the driving unit 11 provided to the burst unit 18 through the OUT terminal P4. Meanwhile, when the comparing unit 17 provides an L level signal to the burst unit 18, the switching element Q1 is not driven according to the output of the driving unit 11.

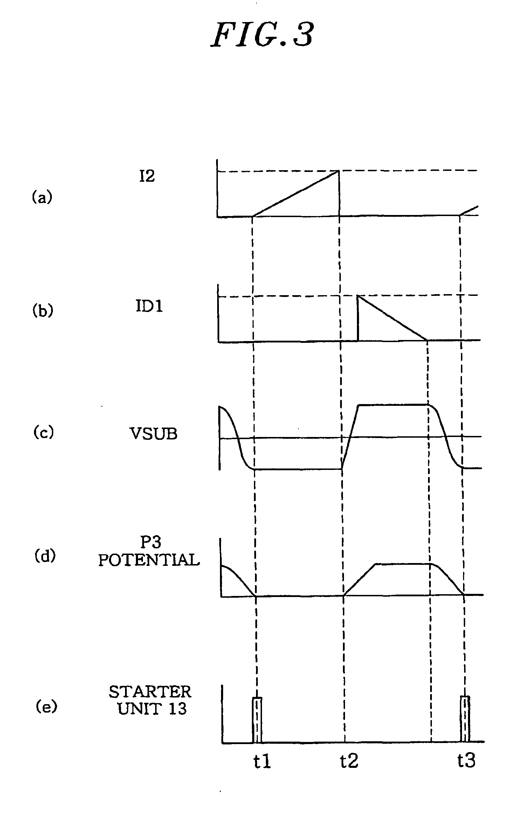

Hereinafter, the operation of the circuit in Fig. 2 will be described. First, in the control IC 10, when the potential inputted to the ZCD terminal P3 becomes less than the threshold value of the zero-potential detection unit 14 (at time t1 in Fig. 3), a short pulse wave is outputted from the starter unit 13 and is inputted to the SET terminal of the driving controller 12. Accordingly, the driving controller 12 operates the driving unit 11, thus enabling the switch Q1 in the insulation flyback circuit 5 to be turned on, when the comparing unit 17 provides the H level signal to the burst unit 18.

When the switching element Q1 is turned on, the insulation flyback circuit 5 is operated such that the core (not shown) of the transformer T1 is magnetized and then a current flowing into the primary side of the transformer T1 gradually increases. Accordingly, the drain current I2 of the switching element Q1 gradually increases, as shown in (a) of Fig. 3.

Thereafter, when the drain current I2 of the switching element Q1 increases, and the output of the current detection unit 7 becomes greater than a predetermined threshold value, a RESET signal from the comparator 15 is inputted to the driving controller 12 in response to the input from the IS terminal P2. Accordingly, the driving controller 12 stops the driving unit 11, and turns off the switching element Q1 at time t2 in Fig. 3.

At time t2, when the switching element Q1 is turned off, a current Id1 flows through the secondary side of the transformer T1 on the basis of an energy stored in the transformer T1 through the above operations, as shown in (b) of Fig. 3. Then, the current Id1 gradually falls with the passage of time.

Further, when the energy of the transformer T1 is released, the voltage Vsub of the detection coil 20 gradually falls. When the potential of ZCD terminal P3 becomes, e.g., 0 V as shown in (d) of Fig. 3, a short pulse wave from the starter unit 13 is inputted to the SET terminal of the driving controller 12 at time t3, as shown in (e) of Fig. 3. That is, the switching element Q1 is turned on again. The above operations are repeatedly performed, so that PWM control can be executed.

As described above, as the switching element Q1 performs a switching operation, an almost constant DC voltage is generated at the capacitor C1, and a voltage smoothed by the capacitor C1 is supplied to the light source 2, thereby lighting the light source 2. Furthermore, the light output of the light source 2 is determined by the ratio of the ON period and the OFF period (On-duty ratio) in the switching operation of the switching element Q1.

In the case of a low-load in which the set dimming level is low, the input to the photo coupler PC1 increases. And then the current flowing out from the FB terminal P1 increases, and the reference voltage of the comparator 15 and the voltage of the FB terminal P1 are reduced. The dimming control unit 3 performs a burst control wherein the switching operation of the switching element Q1 is stopped when the voltage of the FB terminal P1 becomes less than the stop threshold voltage Vth, and the switching operation of the switching element Q1 is resumed when the voltage becomes not less than the stop threshold voltage Vth, as will be described later.

Further, the input of the photo coupler PC1 is the output of the OP Amp OP1, and is a difference between the reference signal, which has been outputted from the reference signal generation unit 8 and has the same frequency component as the control signal S1, and the current I1 which flows through the light source 2. Therefore, a potential is inputted to the photo coupler PC1, wherein the potential is set such that as the set dimming level is lower, the potential is higher and as the dimming level is higher, the potential is lower, and such that the potential changes within a predetermined range at the same frequency as that of the reference signal (the frequency identical to that of the control signal S1).

Therefore, when the dimming level becomes lower, a period during which the potential of the FB terminal P1 becomes lower than the stop threshold voltage Vth occurs, and a predetermined stop period occurs in the switching operation of the switching element Q1, as shown in Fig. 5. For example, in the case of a dimming low limit, the potential of the FB terminal P1 regularly varies within the range of fluctuation from a maximum of 0.5 V to a minimum of 0.3 V when the stop threshold voltage Vth is 0.4 4 V. When the potential of the FB terminal P1 is equal to or greater than 0.4 V, the switching operation of the switching element Q1 is performed, whereas when FB terminal P1 is less than 0.4 V, the switching operation of the switching element Q1 is stopped.

The burst control is performed by a burst controller including the reference signal generation unit 8, the OP Amp OP1, the photo coupler PC1, the comparing unit 17 and the burst unit 18. When the potential of the FB terminal P1 is not less than the stop threshold voltage Vth, the comparing unit 17 provides the H level signal to the burst unit 18, so that the switching element Q1 is driven by the output of the driving unit 11. When the potential of the FB terminal P1 is less than the stop threshold voltage Vth, the comparing unit 17 provides the L level signal to the burst unit 18, so that the switching element Q1 is not driven by the output of the driving unit 11.

In this way, the dimming control unit 3 performs control so that the light outputted from the light source 2 becomes an output corresponding to the dimming level set by the user by performing the burst control on the switching element Q1 in the case of the low-load in which a low dimming level is set. The frequency of burst control by the dimming control unit 3 is set to the frequency of the reference signal outputted from the reference signal generation unit 8.

As described above, even when the light source 2 is lighting with a low output, the frequency of burst control by the dimming control unit 3 may be fixed at a predetermined frequency, and a blinking or flicker phenomenon may be suppressed.

Further, in the frequencies of the control signal S1 and the reference signal that is outputted to the OP Amp OP1, the frequency of the reference signal is set to the same frequency as the control signal S1. Accordingly, when the frequency of the control signal S1 is set to 1 kHz, the frequency of burst control may also be fixed at 1 kHz. As a result, since a variation in light output is also 1 kHz, a blinking or flicker phenomenon may be suppressed.

In this case, the lower limit of the frequency of the control signal S1 may preferably be 300 Hz and the upper limit of the frequency may preferably be 1000 Hz. Therefore, a blinking or flicker phenomenon occurring in a range that can be perceived by human eyes can be suppressed.

In the lighting device and the illumination apparatus according to the present invention, even when a solid-state light emitting element is turned on with a low output, a blinking or flicker phenomenon may be suppressed.

While the invention has been shown and described with respect to the embodiments, the present invention is not limited thereto. It will be understood by those skilled in the art that various changes and modifications may be made without departing from the scope of the invention as defined in the following claims.

## Claims

1. A lighting device (1), comprising:
a lighting circuit for switching an input from a DC power source (4) by using a switching element (Q1) and outputting a smoothed output to a solid-state light emitting element (2); and
a dimming control unit (3) for controlling a switching operation of the switching element (Q1) based on a control signal having an on-duty ratio determined according to a dimming level to thereby adjust an output to the solid-state light emitting element (2), the dimming control unit (3) including:
a driving control unit (10) for performing a pulse width modulation (PWM) control on the switching element; and
a burst control unit (18) for receiving a feedback signal varying depending on the output to the solid-state light emitting element (2) and providing a stop period in the PWM control performed by the driving control unit (10), based on a threshold value and magnitudes of the feedback signal and a reference signal (Va).

2. The lighting device (1) of claim 1, wherein the burst control unit (18) provides the stop period in the PWM control by the driving control unit (10), based on the threshold value and a difference signal which is determined by the difference between the feedback signal and the reference signal (Va).

3. The lighting device (1) of claim 1, wherein the burst control unit includes a reference signal generation unit (8) generating the reference signal (Va), a frequency of the reference signal being equal to a frequency of the control signal.

4. The lighting device (1) of claim 3, wherein a lower and an upper limit of the frequency of the control signal are 300 Hz and 1000 Hz, respectively.

5. An illumination apparatus comprising the solid-state light emitting element (2) and the lighting device (1) described in any one of claims 1 to 4.

## Patentansprüche

1. Leuchtvorrichtung (1), umfassend:
eine Leuchtschaltung zum Schalten eines Eingangs von einer Gleichstromleistungsquelle (4) durch Verwenden eines Schaltelements (Q1) und Ausgeben eines geglätteten Ausgangs zu einem lichtemittierenden Festkörper-Element (2); und
eine Abblendsteuerungseinheit (3) zum Steuern eines Schaltbetriebs des Schaltelements (Q1), basierend auf einem Steuerungssignal, das ein in-Betrieb-Verhältnis hat, das gemäß einem Abblendniveau bestimmt wird, um so einen Ausgang des lichtemittierenden Festkörper-Elements (2) einzustellen, wobei die Abblendsteuereinheit (3) umfasst:
eine Ansteuer-Steuereinheit (10) zum Durchführen einer Pulsweitenmodulationssteuerung (PWM) an dem Schaltelement; und
eine Burst-Steuereinheit (18) zum Empfangen eines Rückkopplungssignals, das in Abhängigkeit von dem Ausgang zu dem lichtemittierenden Festkörper-Element (2) variiert, und Bereitstellen einer Stoppperiode in der PWM-Steuerung, die durch die Ansteuer-Steuereinheit (10) durchgeführt wird, basierend auf einem Schwellwert und Größen des Rückkopplungssignals und eines Referenzsignals (Va).

2. Leuchtvorrichtung (1) nach Anspruch 1, bei welcher die Burst-Steuereinheit (18) die Stoppperiode in der PWM-Steuerung durch die Ansteuer-Steuereinheit (10) basierend auf dem Schwellwert und einem Differenzsignal, das durch die Differenz zwischen dem Rückkopplungssignal und dem Referenzsignal (Va) bestimmt wird, bereitstellt.

3. Leuchtvorrichtung (1) nach Anspruch 1, bei welcher die Burst-Steuereinheit eine Referenzsignalerzeugungseinheit (8) umfasst, die das Referenzsignal (Va) erzeugt, wobei eine Frequenz des Referenzsignals gleich zu einer Frequenz des Steuerungssignals ist.

4. Leuchtvorrichtung (1) nach Anspruch 3, bei welcher eine untere bzw. eine obere Grenze der Frequenz des Steuerungssignals 300 Hz bzw. 1000 Hz ist.

5. Beleuchtungsvorrichtung, die das lichtemittierende Festkörper-Element (2) und die Leuchtvorrichtung (1) umfasst, die in einem der Ansprüche 1 bis 4 beschrieben sind.

## Revendications

1. Dispositif d'éclairage (1) comprenant :
un circuit d'éclairage pour commuter une entrée provenant d'une source de puissance continue (4) en utilisant un élément de commutation (Q1) et délivrer une sortie lissée à un élément électroluminescent à semi-conducteurs (2) ; et
une unité de commande de gradation (3) pour commander une opération de commutation de l'élément de commutation (Q1) sur la base d'un signal de commande ayant un facteur de marche déterminé conformément à un niveau de gradation pour, de ce fait, ajuster une sortie vers l'élément électroluminescent à semi-conducteurs (2), l'unité de commande de gradation (3) comprenant :
une unité de contrôle de commande (10) pour effectuer une commande par modulation de largeur d'impulsion (PWM) sur l'élément de commutation ; et
une unité de commande de salve (18) pour recevoir un signal de rétroaction variant en fonction de la sortie vers l'élément électroluminescent à semi-conducteurs (2) et pour fournir une période d'arrêt de la commande PWM effectuée par l'unité de contrôle de commande (10) sur la base d'une valeur de seuil et des amplitudes du signal de rétroaction et d'un signal de référence (Va).

2. Dispositif d'éclairage (1) selon la revendication 1, dans lequel l'unité de commande de salve (18) fournit la période d'arrêt de la commande PWM par l'unité de contrôle de commande (10) sur la base de la valeur de seuil et d'un signal de différence qui est déterminé par la différence entre le signal de rétroaction et le signal de référence (Va).

3. Dispositif d'éclairage (1) selon la revendication 1, dans lequel l'unité de commande de salve comprend une unité de génération de signal de référence (8) générant le signal de référence (Va), une fréquence du signal de référence étant égale à une fréquence du signal de commande.

4. Dispositif d'éclairage (1) selon la revendication 3, dans lequel une limite inférieure et une limite supérieure de la fréquence du signal de commande sont 300 Hz et 1.000 Hz, respectivement.

5. Appareil d'illumination comprenant l'élément électroluminescent à semi-conducteurs (2) et le dispositif d'éclairage (1) décrit dans l'une quelconque des revendications 1 à 4.
